# FASCICULE DE BREVET EUROPEEN

(11) **EP 2 097 284 B1**
(45) Date de publication et mention de la délivrance du brevet: **19.01.2011**
(21) Numéro de dépôt: 07847297.4
(22) Date de dépôt: 23.11.2007
(51) Int. Cl.: B60K 7/00, F16D 49/10, B60K 17/04

(54) **CHAÎNE CINÉMATIQUE POUR VÉHICULE À PROPULSION ÉLECTRIQUE**
KINEMATISCHE KETTE FÜR EIN FAHRZEUG MIT ELEKTRISCHEM ANTRIEB
CINEMATIC CHAIN FOR AN ELECTRIC PROPULSION VEHICLE

(30) Priorité: 24.11.2006 FR 0610377
(43) Date de publication de la demande: 09.09.2009
(73) Titulaire: Société de Technologie MICHELIN, 63000 Clermont-Ferrand (FR); MICHELIN Recherche et Technique S.A., 1763 Granges-Paccot (CH)
(72) Inventeur: GASHI, Rexhep, 1782 Givisiez (CH)
(74) Mandataire: Lasson, Cédric Y. M.
(86) Numéro de dépôt international: PCT/EP2007/062733
(87) Numéro de publication internationale: WO 2008/062053

(56) Documents cités:
- WO-A-03/000515
- DE-A1- 2 137 433
- DE-U1- 8 915 756
- DE-U1-202005 020 632
- GB-A- 586 567
- US-A- 4 488 053

## Description

La présente invention concerne la liaison au sol des véhicules automobiles à traction électrique, en particulier leur chaîne cinématique et plus précisément la fonction d'immobilisation pour ces véhicules.

De manière conventionnelle sur les véhicules actuels, la fonction d'immobilisation est assurée par un dispositif utilisant le frein de secours (souvent appelé « frein à main ») qui est maintenu sous tension lorsque le véhicule est stationné. C'est pourquoi on parle couramment de « frein de stationnement » bien que cette fonction ne corresponde pas réellement à un freinage au sens propre puisqu'elle n'implique pas de ralentissement. C'est donc au frein de stationnement et à plus proprement parler à la fonction d'immobilisation du véhicule que se rapporte la présente invention.

Par les demandes de brevet EP 0878332, WO2006/032669 ou WO2003/065546 on connaît des liaisons au sol pour véhicules automobiles à traction électrique dans lesquelles une ou plusieurs machines électriques entraînent la roue par l'intermédiaire de moyens de réduction. On sait que les machines électriques peuvent aussi être utilisées pour ralentir le véhicule et le cas échéant permettre à cette occasion une récupération d'énergie. Le document DE 8315756 U1 décrit une chaîne cinématique comportant les caractéristiques du préambule de la revendication 1.

Bien qu'elles puissent effectivement servir à ralentir le véhicule, on ne peut pas utiliser les machines électriques pour assurer la fonction d'immobilisation du véhicule. En effet, lorsque l'on maintient durablement le véhicule immobile à l'aide des machines électriques, plusieurs difficultés apparaissent : d'une part, la consommation électrique des machines et leur échauffement peuvent être importants, surtout lorsque le véhicule est stationné sur un sol en pente et d'autre part, il faudrait pouvoir garantir que les machines ou leur circuit de commande ne connaissent aucune défaillance y compris sur une longue période d'immobilisation. Ces contraintes font que, malgré tous les avantages que l'on peut en attendre (en particulier du point de vue de l'encombrement dans les roues), il s'avère impossible dans l'état actuel de la technologie de confier la fonction de frein de stationnement aux machines électriques de traction. C'est pourquoi les véhicules électriques utilisent comme frein de stationnement des dispositifs à friction agissant sur les roues par l'intermédiaire de disques ou de tambours à la manière des véhicules conventionnels à moteurs thermiques. Ces moyens ont pour principal inconvénient d'être lourds et encombrants.

Un objectif de l'invention est donc d'assurer de manière compacte et légère la fonction d'immobilisation d'un véhicule à traction électrique.

L'invention concerne ainsi une chaîne cinématique pour véhicule à traction électrique, selon la revendication 1

De préférence, une commande destinée à être actionnée par le conducteur du véhicule est reliée par un câble au lien d'immobilisation.

De préférence, le câble étant de type Bowden, sa gaine prend appui sur le stator, le câble étant lié aux deux extrémités du lien d'immobilisation par un tirant, le lien s'étendant sensiblement sur l'intégralité du périmètre du disque.

De préférence, une gorge extérieure solidaire du stator accueille le lien lorsque le frein de stationnement est desserré.

De préférence, les moyens de réduction définissant un rapport de réduction entre la vitesse de rotation de la machine électrique rotative et la vitesse de rotation de la roue, le rapport de réduction est supérieur à 10, de préférence supérieur à 15 et les moyens de réduction comprennent deux étages de réduction.

De préférence, la roue est entraînée par au moins une machine électrique rotative propre à la dite roue, de préférence montée solidaire de l'axe de ladite roue.

L'invention concerne également un véhicule comportant au moins une telle chaîne cinématique, ledit véhicule étant en outre dépourvu de frein de service mécanique.

D'autres objectifs et avantages de l'invention apparaîtront plus clairement dans la description qui va suivre d'un mode de réalisation préféré. Les figures représentent respectivement:
- Figure 1 : vue en perspective d'un mode de réalisation préféré d'une chaîne cinématiqueselon l'invention,
- Figure 2 : vue en perspective de l'implantation du frein de stationnement sur la machine électrique de la figure 1,
- Figure 3 : vue en coupe axiale d'un mode de réalisation du frein de stationnement,
- Figure 4 : vue en coupe axiale selon le plan A-A du mode de réalisation du frein de stationnement de la figure 3,
- Figure 5 : vue de détail de la partie inférieur de la vue de la figure 3.

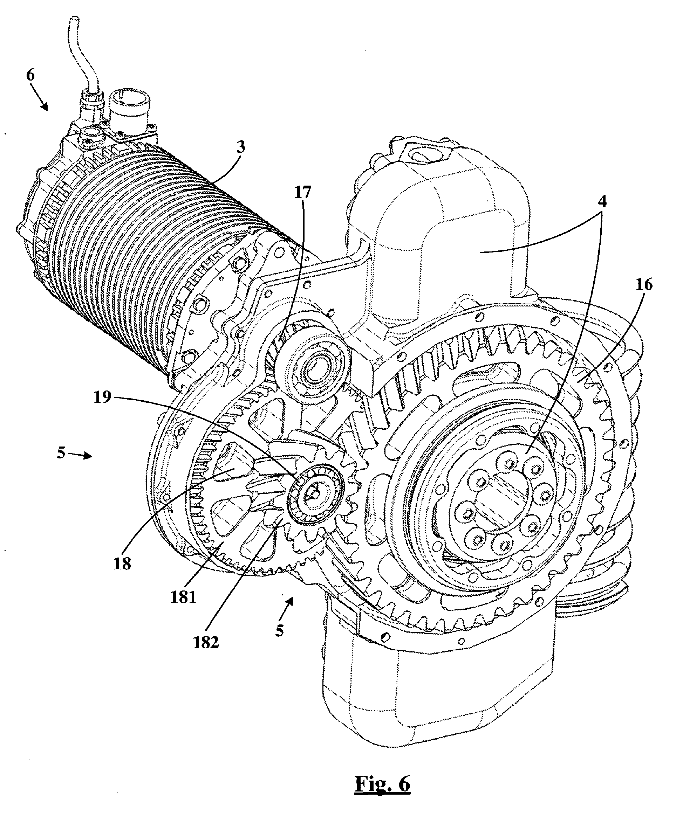

- Figure 6 : vue en perspective de la chaîne cinématique selon l'invention montrant en particulier ses moyens de réduction.

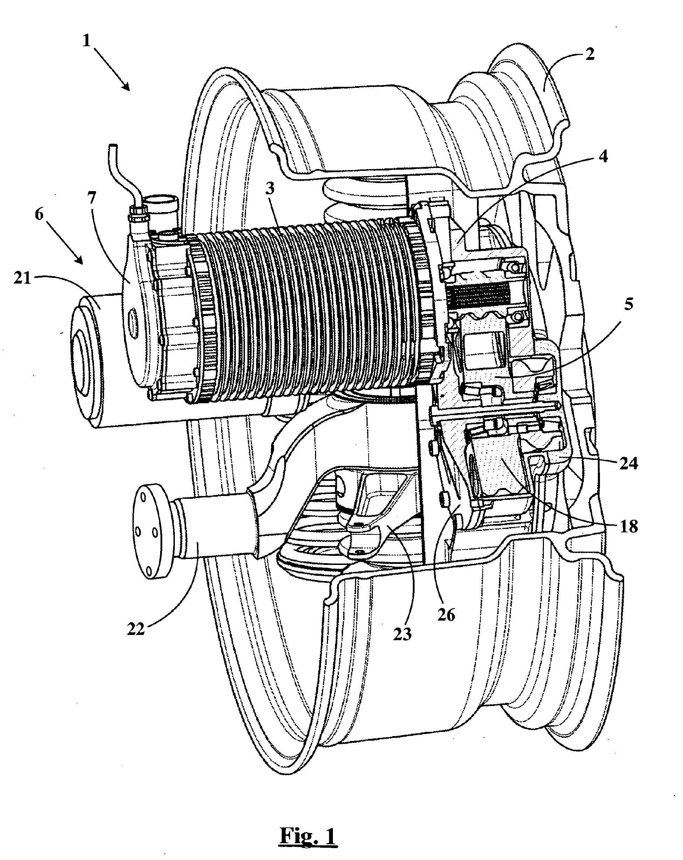

Sur la figure 1, on a représenté un exemple de chaîne cinématique 1 selon l'invention. On voit une roue 2, une machine électrique rotative de traction 3 montée sur le porte-roue 4. La roue est entraînée par la machine électrique par l'intermédiaire de moyens de réduction 5. La roue 2 est destinée à recevoir un pneumatique non représenté.

A l'arrière de la machine électrique 3, on trouve le frein de stationnement 6 sous son carter 7.

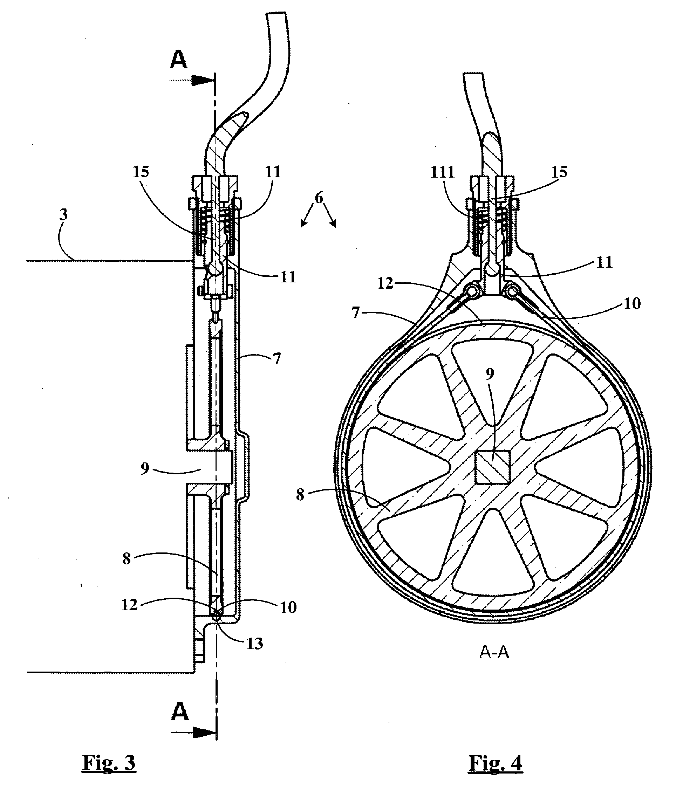

Comme bien visible aux figures 3, 4 et 5, le frein de stationnement agit entre le stator et le rotor pour bloquer la rotation de la machine électrique et donc maintenir immobile, de manière indirecte mais certaine, la roue du véhicule. Le frein de stationnement selon l'invention profite ainsi de l'effet des moyens de réduction. Sa dimension, son poids et son coût s'en trouvent réduits par rapport à un dispositif qui agirait directement au niveau de la roue, c'est à dire sans démultiplication.

Détaillons maintenant le fonctionnement de ce mode de réalisation préféré du frein de stationnement selon l'invention. Un disque 8 est solidaire de l'arbre 9 du rotor de la machine électrique 3. Un lien d'immobilisation 10 lié au stator entoure la périphérie du disque. Les deux extrémités du lien sont tenues par un tirant 11 et on comprend que selon la position du tirant et la tension qu'il transmet, le lien bloque le disque ou le laisse libre de tourner. On comprend également qu'il n'est pas nécessaire d'agir avec une force importante sur le tirant 11 pour obtenir le couple d'immobilisation suffisant du disque grâce à l'effet d'autoserrage (que l'on appelle aussi « effet cabestan »).

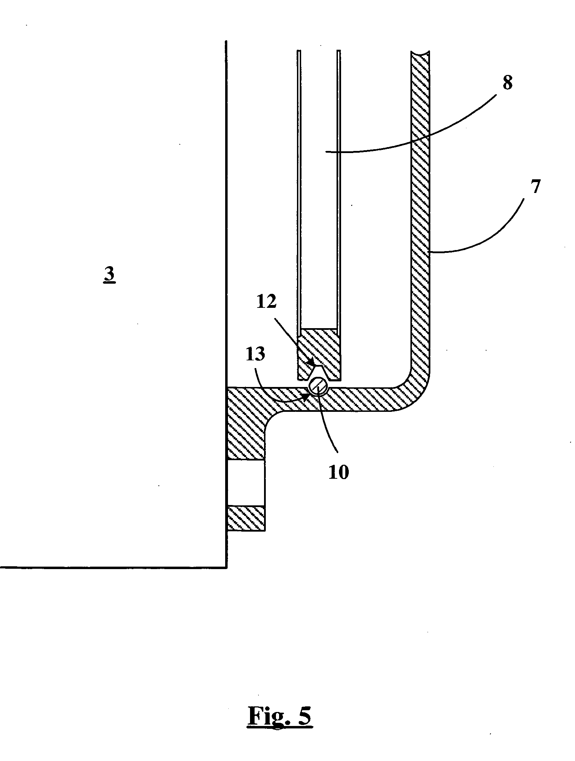

Comme on le voit mieux sur la vue de détail de la figure 5, une gorge périphérique 12, par exemple en V, est de préférence ménagée sur la périphérie du disque et accueille le lien en position d'immobilisation, frein de stationnement serré. Cette disposition augmente encore le couple d'immobilisation pour une même force appliquée au tirant 11.

Une gorge extérieure 13 est ménagée dans le carter 7 pour accueillir le lien 10 dans sa position de repos, frein de stationnement desserré. Les deux gorges 12 et 13 se trouvent en regard l'une de l'autre de manière à ce que le lien d'immobilisation soit guidé en toutes circonstances. Ainsi, la course du tirant nécessaire pour passer de la position serrée à la position desserrée est très réduite tout en garantissant qu'aucun frottement gênant n'a lieu en position desserrée. De préférence, un ressort 111 tend à repousser le tirant vers sa position desserrée. Le ressort coopère ainsi avec l'élasticité de flexion du lien pour le maintenir plaqué au fond de la gorge extérieure tant que le frein de stationnement n'est pas serré.

Le lien d'immobilisation peut être réalisé de différentes manières, pourvu qu'il convienne tant du point de vue de sa rigidité en flexion que de sa résistance en traction. Un fil d'acier à haute limite élastique peut par exemple tout à fait convenir.

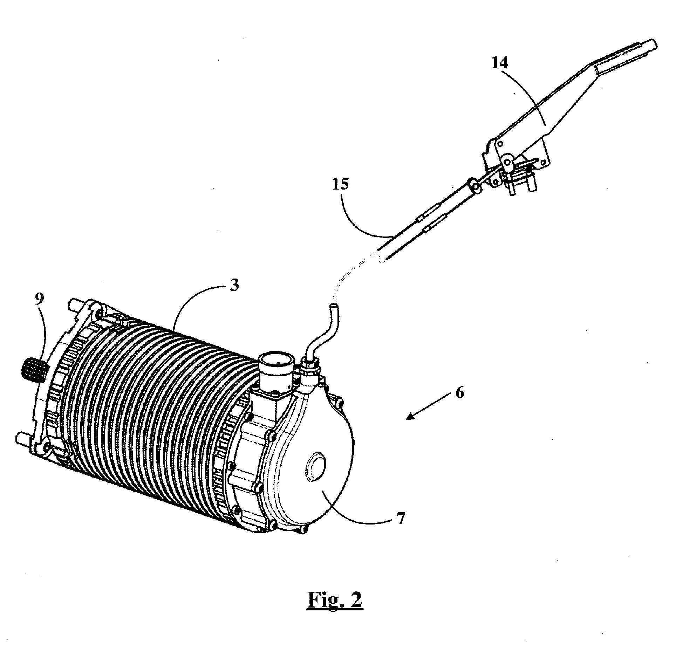

Une commande de frein de stationnement, comme un levier 14, peut être reliée au tirant par un câble 15 de type Bowden (voir figure 2) ou de toute autre manière convenable.

Afin d'éviter que le conducteur n'actionne le frein de stationnement avant l'arrêt complet du véhicule, le mouvement de la commande peut être interdit par tout dispositif sensible à la vitesse de rotation de la machine électrique 3 ou de la roue 2.

La commande du frein de stationnement peut également être une commande électrique agissant directement sur le tirant 11. Cette commande peut être contrôlée par le conducteur mais elle peut de préférence être complètement automatisée.

De préférence, la machine électrique de traction est en outre utilisée pour freiner électriquement le véhicule. Lorsque l'on parle ici de « freinage », on fait cette fois référence au frein de service (par opposition au frein de stationnement). Le frein de service a non seulement pour fonction de ralentir le véhicule mais également à permettre son arrêt rapide et complet en transmettant à la roue un couple freineur tel que l'on puisse aller jusqu'au glissement total (blocage) de la roue alors que le véhicule est en mouvement.

Dans ce mode de réalisation préféré, la machine électrique rotative de traction 3 est simultanément une machine électrique rotative de freinage. Elle est donc apte à assurer seule le freinage et l'entraînement de la roue. C'est pourquoi, selon le contexte, on emploie dans la présente demande les termes de « machine de traction » ou « machine de traction /freinage » pour le même objet, cet objet portant la référence 3 sur les dessins.

Une telle chaîne cinématique est alors dépourvue de frein de service mécanique, c'est à dire que le frein de service n'a pas recours à des moyens de freinage conventionnels à friction comme un frein à disque ou à tambour.

Comme on l'a vu plus haut, le frein de service est différent du frein de stationnement qui a pour fonction d'immobiliser le véhicule après son arrêt, par exemple pendant l'absence du conducteur. Cette fonction de maintien immobile ne requiert en particulier aucune capacité de dissipation d'énergie. On comprend donc que la chaîne cinématique selon l'invention peut comporter un frein de stationnement mécanique bien qu'elle ne comporte pas de frein de service mécanique.

Les moyens de réduction comprennent au moins une couronne dentée 16 solidaire de la roue et un pignon 17 entraîné par la machine de traction 3. Le rapport de réduction, c'est à dire le rapport entre la vitesse de rotation de la machine de traction et la vitesse de rotation de la roue est supérieur à 10, de préférence supérieur à 15. Ce rapport de réduction peut être obtenu directement par l'engrenage du pignon 17 et de la couronne 16.

Les moyens de réduction comprennent ici deux étages de réduction sous la forme représentée ici d'un réducteur 18 agissant entre le pignon 17 et la couronne 16. Le rapport de réduction déterminé par les moyens de réduction est unique et fixe.

Le réducteur 18 comporte ici deux roues dentées 181 et 182 coaxiales et solidaires, la roue primaire 181 engrenant avec le pignon 17 de la machine de traction/freinage et la roue secondaire 182 (de diamètre réduit par rapport à la roue primaire) engrenant avec la couronne dentée 16. De préférence, le réducteur 18 est guidé par rapport au porte-roue 4 par l'intermédiaire d'une paire de roulements à rouleaux coniques 19 et une vis axiale 184 reprend la composante axiale des efforts transmis par les roulements coniques à leurs supports.

De préférence, les dentures des roues primaire et secondaire, du pignon et de la couronne sont hélicoïdales. Les moyens de réductions doivent demeurer réversibles, c'est à dire qu'ils doivent pouvoir tourner dans un sens comme dans l'autre mais également transmettre un couple de la machine de traction/freinage vers la roue et de la roue vers la machine de traction/freinage dans des conditions de rendement acceptables. De préférence, les angles des dentures des roues primaire et secondaire sont orientés dans le même sens. Cette caractéristique permet de minimiser l'effort axial agissant sur le réducteur et donc sur le porte-roue.

De préférence, comme représenté sur les figures, l'axe de la machine de traction/freinage 3, l'axe du réducteur 18 et l'axe de rotation de la roue sont parallèles.

De préférence, la suspension de la liaison au sol est une suspension à coulisse verticale contrôlée activement par une deuxième machine électrique rotative 21 selon l'enseignement du document WO2006/032669.

Le support 22 est destiné à relier la liaison au sol à la caisse du véhicule, soit rigidement soit par une liaison permettant des degrés de liberté supplémentaires comme par exemple une variation de la hauteur de caisse et/ou du carrossage des roues (par exemple selon l'enseignement de la demande de brevet EP1616731), un filtrage des vibrations ou une suspension horizontale.

Le braquage de la roue par rapport à la caisse du véhicule et donc par rapport au support 22 a de préférence lieu autour d'un axe de pivot vertical situé au centre de la coulisse de suspension (voir le levier de braquage 23 sur la figure 1).

On visualise bien sur la figure 5 que le porte-roue 4 constitue un carter recevant l'ensemble des moyens de réduction (couronne dentée 16, pignon 17 et réducteur 18). Ce carter est fermé par un premier couvercle étanche 24 du côté du disque de roue et par un deuxième couvercle étanche 26 du côté intérieur. Tous les engrenages sont ainsi confmés dans le carter. Le carter peut contenir un lubrifiant adapté. On voit également bien sur cette figure le montage du pignon 17 et du réducteur 18 dans ledit carter.

La force de freinage ou de traction disponible dépend du couple disponible sur l'arbre de la machine 3, du rapport de réduction et du rayon de la roue. Par exemple pour une machine capable de générer un couple de 90 N.m, un rapport de réduction de 17 et pour un rayon de roue de 300 mm, la force de traction ou de freinage peut atteindre 5100 N. Cette force est suffisante pour utiliser 100% du potentiel d'adhérence d'un pneumatique portant une charge de 5000 N lorsque le coefficient d'adhérence est égal à 1. Ces conditions de charge et d'adhérence sont classiques pour un véhicule de tourisme contemporain. Cet exemple a cependant pour seul but de fixer des ordres de grandeurs, il n'est pas destiné à limiter l'application de l'invention à un type ou une catégorie de véhicules. On comprend que cette force est dénommée « force de traction » lorsqu'elle agit dans le sens de déplacement du véhicule et « force de freinage » lorsqu'elle agit contre le sens de déplacement du véhicule, que le véhicule se déplace en marche avant ou en marche arrière. En réalité, il s'agit d'une même force ayant pour unique origine le couple produit par la machine 3. La puissance de freinage peut donc être suffisante pour pouvoir bloquer les roues du véhicule. Naturellement, le blocage complet des roues n'est pas la meilleure façon d'arrêter un véhicule mais cette référence est destinée à faciliter la compréhension de l'invention.

Un véhicule à quatre roues peut donc en pratique être équipé de quatre liaisons au sol selon l'invention et se dispenser complètement de frein de service mécanique. Un véhicule selon l'invention peut également utiliser seulement deux telles liaisons au sol. Selon l'invention, on peut également envisager de mettre en oeuvre deux ou plusieurs machines de traction/freinage au sein de chaque roue. Un avantage de ce choix peut être la redondance possible des moyens de traction et surtout de freinage.

De plus, l'absence d'organe de freinage mécanique conventionnel (voir disque et pince dans la demande EP 0878332) simplifie substantiellement l'entretien du véhicule en éliminant les opérations périodiques de remplacement des plaquettes et des disques. Parmi les avantages de la suppression des organes de freinage hydraulique conventionnels, on peut citer en outre l'élimination de tout frottement résiduel des plaquettes (on sait que ces frottements consomment une part non négligeable de l'énergie nécessaire au fonctionnement d'un véhicule à freinage conventionnel). On peut également citer comme avantage la suppression des contraintes thermiques induites sur la liaison au sol par les organes de freinage hydraulique conventionnels et l'élimination des nuisances liées aux poussières produites par l'usure des plaquettes et des disques.

On comprend que le faible encombrement du frein de stationnement selon l'invention soit un avantage important puisqu'un intérêt spécifique de ce type de liaison au sol est d'intégrer l'ensemble des fonctions dans un volume réduit et proche de la roue. Naturellement, le frein de stationnement selon l'invention peut également être mis en oeuvre dans une liaison au sol où la machine électrique 3 est déportée, c'est à dire non solidaire du porte-roue 4. En effet, si la machine électrique de traction/freinage est fixée à la caisse du véhicule et entraîne la roue par l'intermédiaire de transmissions conventionnelles, la fonction du frein de stationnement selon l'invention ne s'en trouve pas modifiée. Il en est de même pour un véhicule qui utiliserait une machine électrique centrale entraînant plusieurs roues par l'intermédiaire de plusieurs transmissions conventionnelles.

Les différentes figures montre un mode de réalisation préféré de l'invention dans lequel le frein de stationnement agit sur le rotor, c'est à dire sur l'arbre de la machine électrique. Par exemple pour des raisons d'encombrement, on peut au contraire choisir d'appliquer le principe de l'invention en bloquant la rotation d'un arbre supplémentaire engrainant sur la couronne 16 ou sur le réducteur 18. Cet arbre tournant supplémentaire est donc animé par les moyens de réduction de la machine de traction/freinage.

On a décrit principalement ici un mode de réalisation préféré de l'invention dans lequel on utilise un fil métallique coopérant avec une gorge périphérique d'un disque. L'homme du métier comprend que le principe de l'invention peut s'appliquer de manière similaire en utilisant d'autres moyens comme par exemple une sangle textile agissant sur un tambour lié au rotor ou une simple goupille qui serait mobile entre une position dans laquelle le rotor est libre de tourner et une position dans laquelle le rotor est immobilisé par rapport au stator.

## Revendications

1. Chaîne cinématique pour véhicule à traction électrique, la traction du véhicule étant assurée par au moins une machine électrique rotative (3) agissant sur au moins une roue (2) du véhicule par l'intermédiaire de moyens de réduction (5), ladite chaîne cinématique comprenant un frein de stationnement (6) agissant entre le rotor (9) et le stator de la machine électrique, un disque (8) étant solidaire du rotor (9) et un lien d'immobilisation (10) étant lié au stator, ladite chaîne cinématique étant **caractérisée en ce que** le lien d'immobilisation vient serrer la périphérie du disque pour empêcher sa rotation, le disque comportant une gorge (12) périphérique destinée à accueillir le lien d'immobilisation.

2. Chaîne cinématique selon la revendication 1, comprenant une commande (14) destinée à être actionnée par le conducteur du véhicule, la commande étant reliée par un câble (15) au lien d'immobilisation.

3. Chaîne cinématique selon la revendication 2, dans laquelle le câble étant de type Bowden, sa gaine prenant appui sur le stator, le câble étant lié aux deux extrémités du lien d'immobilisation par un tirant (11), le lien s'étendant sensiblement sur l'intégralité du périmètre du disque.

4. Chaîne cinématique selon l'une des revendications 2 ou 3, dans laquelle une gorge extérieure (13) solidaire du stator accueille le lien lorsque le frein de stationnement est desserré.

5. Chaîne cinématique selon l'une des revendications précédentes, dans laquelle les moyens de réduction (5) définissent un rapport de réduction entre la vitesse de rotation de la machine électrique rotative et la vitesse de rotation de la roue, le rapport de réduction étant supérieur à 10.

6. Chaîne cinématique selon la revendication 5 dans laquelle le rapport de réduction est supérieur à 15 et les moyens de réduction comprennent deux étages de réduction.

7. Chaîne cinématique selon l'une des revendications précédentes, dans laquelle la roue est entraînée par au moins une machine électrique rotative propre à la dite roue.

8. Chaîne cinématique selon la revendication 7, dans laquelle ladite machine électrique rotative est montée solidaire de l'axe de ladite roue.

9. Véhicule comportant au moins une chaîne cinématique selon l'une des revendications précédentes, ledit véhicule étant en outre dépourvu de frein de service mécanique.

## Claims

1. Kinematic chain for an electric traction vehicle, the traction of the vehicle being provided by at least one rotating electric machine (3), acting on at least one wheel (2) of the vehicle by means of reduction means (5), said kinematic chain comprising a parking brake (6) acting between the rotor (9) and the stator of the electric machine, a disc (8) being fixed to the rotor (9) and an immobilizing link (10) being connected to the stator, **characterized in that** the immobilizing link gripping the periphery of the disc to prevent the rotation thereof, the disc comprising a peripheral groove (12) intended to receive the immobilizing link.

2. Kinematic chain according to Claim 1, comprising a control (14) intended to be actuated by the driver of the vehicle, the control being connected by a cable (15) to the immobilizing link.

3. Kinematic chain according to Claim 2, in which the cable is of the Bowden type, its sheath bearing against the stator, the cable being connected to the two ends of the immobilizing link by a tie rod (11), the link extending substantially over the entire perimeter of the disc.

4. Kinematic chain according to one of Claims 2 or 3, in which an external groove (13) integral with the stator receives the link when the parking brake is released.

5. Kinematic chain according to one of the preceding claims, in which the reduction means (5) define a reduction ratio between the speed of rotation of the rotating electric machine and the speed of rotation of the wheel, the reduction ratio being greater than 10.

6. Kinematic chain according to Claim 5, in which the reduction ratio is greater than 15 and the reduction means comprise two reduction stages.

7. Kinematic chain according to one of the preceding claims, in which the wheel is driven by at least one rotating electric machine belonging to said wheel.

8. Kinematic chain according to Claim 7, in which said rotating electric machine is mounted, fixedly to the axle of said wheel.

9. Vehicle comprising at least one kinematic chain according to one of the preceding claims, said vehicle further not comprising a mechanical service brake.

## Patentansprüche

1. Antriebsstrang für ein Fahrzeug mit elektrischem Antrieb, wobei der Antrieb des Fahrzeugs durch mindestens eine elektrische Rotationsmaschine (3) gewährleistet wird, die durch Untersetzungsmittel (5) auf mindestens ein Rad (2) des Fahrzeugs einwirkt, wobei der Antriebsstrang eine Feststellbremse (6), die zwischen dem Ständer (9) und dem Läufer der elektrischen Maschine wirkt, eine fest mit dem Ständer (9) verbundene Scheibe (8) und ein mit dem Läufer verbundenes Blockierverbindungsglied (10) umfasst, wobei der Antriebsstrang **dadurch gekennzeichnet ist, dass** das Blockierverbindungsglied den Umfang der Scheibe festklemmt, um ihre Drehung zu verhindern, wobei die Scheibe eine Umfangsnut (12) aufweist, die das Blockierverbindungsglied aufnehmen soll.

2. Antriebsstrang nach Anspruch 1, der ein Bedienelement (14) aufweist, das von dem Fahrer des Fahrzeugs betätigt werden soll, wobei das Bedienelement durch ein Kabel (15) mit dem Blockierverbindungsglied verbunden ist.

3. Antriebsstrang nach Anspruch 2, bei dem das Kabel ein Bowden-Kabel ist, wobei dessen Mantel sich auf dem Läufer abstützt, wobei das Kabel durch eine Zugstange (11) mit den beiden Enden des Blockierverbindungsglieds verbunden ist, wobei sich das Verbindungsglied im Wesentlichen über den ganzen Umfang der Scheibe erstreckt.

4. Antriebsstrang nach Anspruch 2 oder 3, bei dem eine fest mit dem Läufer verbundene Außennut (13) das Verbindungsglied aufnimmt, wenn die Feststellbremse gelöst wird.

5. Antriebsstrang nach einem der vorhergehenden Ansprüche, bei dem die Untersetzungsmittel (5) ein Untersetzungsverhältnis zwischen der Drehzahl der elektrischen Rotationsmaschine und der Drehzahl des Rads definieren, wobei das Untersetzungsverhältnis größer als 10 ist.

6. Antriebsstrang nach Anspruch 5, bei dem das Untersetzungsverhältnis größer als 15 ist und die Untersetzungsmittel zwei Untersetzungsstufen umfassen.

7. Antriebsstrang nach einem der vorhergehenden Ansprüche, bei dem das Rad durch mindestens eine zu dem Rad gehörende elektrische Rotationsmaschine angetrieben wird.

8. Antriebsstrang nach Anspruch 7, bei dem die elektrische Rotationsmaschine fest an der Achse des Rads angebracht ist.

9. Fahrzeug mit mindestens einem Antriebsstrang nach einem der vorhergehenden Ansprüche, wobei das Fahrzeug des Weiteren keine mechanische Betriebsbremse hat.
